# DEMANDE DE BREVET EUROPEEN

(11) **EP 4 265 525 A1**
(43) Date de publication de la demande: **25.10.2023**
(21) Numéro de dépôt: 23167549.7
(22) Date de dépôt: 12.04.2023
(51) Int. Cl.: B64D 37/30, B64D 37/04

(54) **FUSELAGE D'AÉRONEF DESTINÉ À RECEVOIR DEUX RÉSERVOIRS PRÉVUS POUR CONTENIR DE L'HYDROGÈNE LIQUIDE**

(30) Priorité: 20.04.2022 FR 2203661
(71) Demandeur: Airbus SAS, 31700 Blagnac (FR); Airbus Operations SAS, 31060 Toulouse (FR); Airbus Operations Limited, Bristol BS34 7PA (GB); Airbus Operations S.L., 28906 Getafe Madrid (ES); Airbus Operations GmbH, 21129 Hamburg (DE)
(72) Inventeur: Alvarez López-Herrero, Elisa, 21129 HAMBURG (DE); Wolff, Matthias, 21129 HAMBURG (DE); Broer, Alexander, 21129 HAMBURG (DE); Tegtmeyer, Rainer, 21129 HAMBURG (DE); Wießmeier, Michael, 21129 HAMBURG (DE); Marquardt, Till, 21129 HAMBURG (DE); Anger, André, 21129 HAMBURG (DE); Wengorra, Anna-Katrin, 21129 HAMBURG (DE); Dias Figueiredo, Marco, 21129 HAMBURG (DE); Martinez Munoz, Jose Luis, 28906 GETAFE MADRID (ES); Gallegos Elvira, Alberto, 28906 GETAFE MADRID (ES); Sahin, Kaya, 31700 BLAGNAC CEDEX (FR); Gallant, Guillaume, 31060 TOULOUSE (FR); Leoviriyakit, Kasidit, BRISTOL, BS34 7PA (GB); Wright, Philip, BRISTOL, BS34 7PA (GB)
(74) Mandataire: Gevers & Orès

(57) **Abrégé**

- Fuselage d'aéronef destiné à recevoir deux réservoirs prévus pour contenir de l'hydrogène liquide.
- Le fuselage (1) comporte un premier tronçon pour un poste de pilotage (6), un deuxième tronçon pour une cabine de passagers (7) et un troisième tronçon (T3) distinct du premier tronçon (T1) et du deuxième tronçon (T2). Le troisième tronçon (T3) comporte deux logements (3) pour loger chacun un réservoir (2). Les deux logements (3) sont disposés symétriquement par rapport à un plan de symétrie vertical (P1). Cette disposition des réservoirs (2) dans un tronçon distinct des autres tronçons permet qu'ils soient situés au plus proches des moteurs (5) qu'ils ont à alimenter

## Description

### Domaine technique

La présente invention concerne un fuselage d'aéronef destiné à recevoir deux réservoirs prévus pour contenir de l'hydrogène liquide.

### État de la technique

Pour se déplacer, un aéronef comporte des systèmes de propulsion comprenant au moins un moteur. Les systèmes de propulsion peuvent correspondre à des turboréacteurs ou des turbopropulseurs dans lesquels un moteur entraîne une hélice en rotation.

Les moteurs de ces systèmes de propulsion peuvent correspondre à des moteurs à combustion interne alimentés par de l'hydrogène liquide. Ces moteurs peuvent également correspondre à des moteurs électriques alimentés par des piles à combustibles. Afin alimenter ces moteurs, il est nécessaire d'embarquer des réservoirs à hydrogène liquide.

La configuration étudiée pour les réservoirs est de les disposer en tandem, c'est-à-dire disposés l'un derrière l'autre parallèlement à l'axe longitudinal de l'aéronef. Ces types d'installation peuvent être un inconvénient si l'on veut minimiser la distance entre les réservoirs et les moteurs (ou les piles à combustible) tout en minimisant entre autres la traînée et la masse.

### Exposé de l'invention

La présente invention a pour objet de remédier à cet inconvénient. Pour cela, elle concerne un fuselage d'aéronef destiné à recevoir deux réservoirs prévus pour contenir de l'hydrogène liquide, l'hydrogène liquide étant destiné à alimenter des moteurs d'au moins un système de propulsion de l'aéronef, le fuselage présentant un plan de symétrie vertical et un premier axe longitudinal, les deux réservoirs présentant chacun un second axe longitudinal, le fuselage comportant dans le sens d'avancement de l'aéronef au moins un premier tronçon de fuselage configuré pour recevoir un poste de pilotage et un deuxième tronçon de fuselage configuré pour recevoir une cabine de passagers.

Selon l'invention, le fuselage comprend un troisième tronçon de fuselage distinct du premier tronçon de fuselage et du deuxième tronçon de fuselage, le troisième tronçon de fuselage comportant deux logements destinés à loger chacun un réservoir, les deux logements sont configurés pour que le second axe longitudinal des deux réservoirs soit parallèle au premier axe longitudinal du fuselage d'aéronef quand les deux réservoirs sont installés dans leur logement, les deux logements étant disposés symétriquement l'un par rapport à l'autre de part et d'autre du plan de symétrie vertical, les deux logements étant configurés pour que le second axe longitudinal des deux réservoirs soit compris dans un plan commun quand les deux réservoirs sont installés dans leur logement.

Ainsi, grâce au fait que les réservoirs peuvent être installés côté à côte dans un tronçon de fuselage distinct des tronçons de fuselage comprenant la cabine passager et le poste de pilotage, les réservoirs peuvent être situés au plus proches des moteurs qu'ils ont à alimenter.

De plus, le troisième tronçon de fuselage comprend une structure travaillante à laquelle les deux réservoirs sont fixés.

Selon un premier mode de réalisation, le troisième tronçon de fuselage est situé à l'arrière du deuxième tronçon de fuselage, le troisième tronçon de fuselage comportant une cloison étanche séparant le deuxième tronçon de fuselage et le troisième tronçon de fuselage.

En outre, le troisième tronçon de fuselage comprend une zone avant située entre le deuxième tronçon de fuselage et les deux logements, la zone avant comprenant une première portion de la structure travaillante destinée à recevoir le ou les systèmes de propulsion de l'aéronef.

De plus, le fuselage comprend deux mâts de moteur fixés à la première portion de la structure travaillante de part et d'autre du plan de symétrie vertical.

Par ailleurs, le troisième tronçon de fuselage comprend une zone arrière, la zone arrière comprenant une deuxième portion de la structure travaillante destinée à recevoir un empennage vertical de l'aéronef.

Selon un deuxième mode de réalisation, le troisième tronçon de fuselage est situé entre le premier tronçon de fuselage et le deuxième tronçon de fuselage, le troisième tronçon de fuselage comportant une première cloison étanche séparant le premier tronçon de fuselage et le troisième tronçon de fuselage, le troisième tronçon de fuselage comportant en outre une deuxième cloison étanche séparant le troisième tronçon de fuselage et le deuxième tronçon de fuselage.

De plus, le troisième tronçon de fuselage comprend une zone arrière située entre les deux logements et le deuxième tronçon de fuselage, la zone arrière comprenant une portion de la structure travaillante destinée à porter le ou les systèmes de propulsion de l'aéronef.

En outre, le fuselage comprend deux mâts de moteur fixés à la portion de la structure travaillante de part et d'autre du plan de symétrie vertical.

Selon une première configuration, le troisième tronçon de fuselage présente deux ouvertures latérales dans une partie latérale du troisième tronçon de fuselage, les deux ouvertures latérales communiquant respectivement avec un des deux logements, chacune des deux ouvertures latérales étant configurée pour laisser le passage d'un réservoir vers un logement respectif, le troisième tronçon de fuselage comportant deux carénages amovibles, chacun des carénages amovibles étant configuré pour fermer et ouvrir alternativement une ouverture latérale respective.

Selon une deuxième configuration, le troisième tronçon de fuselage présente deux ouvertures inférieures dans une partie inférieure du troisième tronçon de fuselage, les deux ouvertures inférieures communiquant respectivement avec un des deux logements, chacune des deux ouvertures inférieures étant configurée pour laisser le passage d'un réservoir vers un logement respectif, le troisième tronçon de fuselage comportant deux portes travaillantes inférieures, chacune des portes travaillantes inférieures étant configurée pour fermer et ouvrir alternativement une ouverture inférieure respective.

Selon une troisième configuration, le troisième tronçon de fuselage présente deux ouvertures arrière dans une partie arrière du troisième tronçon de fuselage, les deux ouvertures arrière communiquant respectivement avec un des deux logements, chacune des deux ouvertures arrière étant configurée pour laisser le passage d'un réservoir un logement respectif, le troisième tronçon de fuselage comportant deux portes travaillantes arrière, chacune des deux portes travaillantes arrière étant configurée pour fermer et ouvrir alternativement une ouverture arrière respective.

Par ailleurs, la structure travaillante cloisonne les deux logements.

De plus, la structure travaillante entoure les deux logements.

Par ailleurs, la structure travaillante présente une forme allongée selon l'axe longitudinal et comportant un plan de symétrie confondu avec le plan de symétrie verticale.

L'invention concerne également un aéronef, en particulier un avion transport comportant un fuselage tel que décrit ci-dessus.

### Brève description des figures

Les figures annexées feront bien comprendre comment l'invention peut être réalisée. Sur ces figures, des références identiques désignent des éléments semblables.
La figure 1 représente une vue avant en perspective d'un aéronef comprenant un fuselage destiné à recevoir deux réservoirs prévus pour contenir de l'hydrogène liquide.
La figure 2 représente une vue en perspective d'un réservoir prévu pour contenir de l'hydrogène liquide et destiné à être logé dans le fuselage.
La figure 3 représente une vue de dessus schématique d'un aéronef embarquant des réservoirs d'hydrogène liquide.
La figure 4 représente une coupe transversale d'une structure travaillante à laquelle les deux réservoirs sont destinés à être fixés.
La figure 5 représente une vue arrière en perspective d'un fuselage comprenant des ouvertures latérales.
La figure 6 représente une vue arrière en perspective d'un fuselage comprenant des ouvertures inférieures.
La figure 7 représente une vue de dessus schématique d'un fuselage comprenant des ouvertures arrière.
La figure 8 représente une vue latérale de l'arrière d'un aéronef embarquant des réservoirs contenant de l'hydrogène liquide.
La figure 9 représente une vue arrière en perspective d'une structure travaillante à laquelle les deux réservoirs sont destinés à être fixés.
La figure 10 représente une vue avant en perspective d'un aéronef ouvert sur les logements destinés à recevoir les réservoirs et présentant des mâts de moteur fixés sur la structure travaillante à laquelle les deux réservoirs sont destinés à être fixés.
La figure 11 représente une vue de dessus d'un fuselage selon le deuxième mode de réalisation.
La figure 12 illustre plusieurs exemples de structures travaillantes représentées selon leur section transversale.

### Description détaillée

Dans la description, on appelle « axe X » la direction longitudinale de l'aéronef orientée positivement dans le sens d'avancement de l'aéronef. On appelle « axe Y » la direction transversale de l'aéronef perpendiculaire à l'axe X. Les axes X et Y sont horizontaux quand l'aéronef se trouve au sol. On appelle « axe Z » la direction verticale de l'aéronef perpendiculaire à l'axe X et à l'axe Y. On appelle « plan horizontal » un plan parallèle à l'axe X et à l'axe Y. On appelle « plan de symétrie vertical » le plan parallèle à l'axe X et à l'axe Z qui correspond au plan de symétrie vertical de l'aéronef.

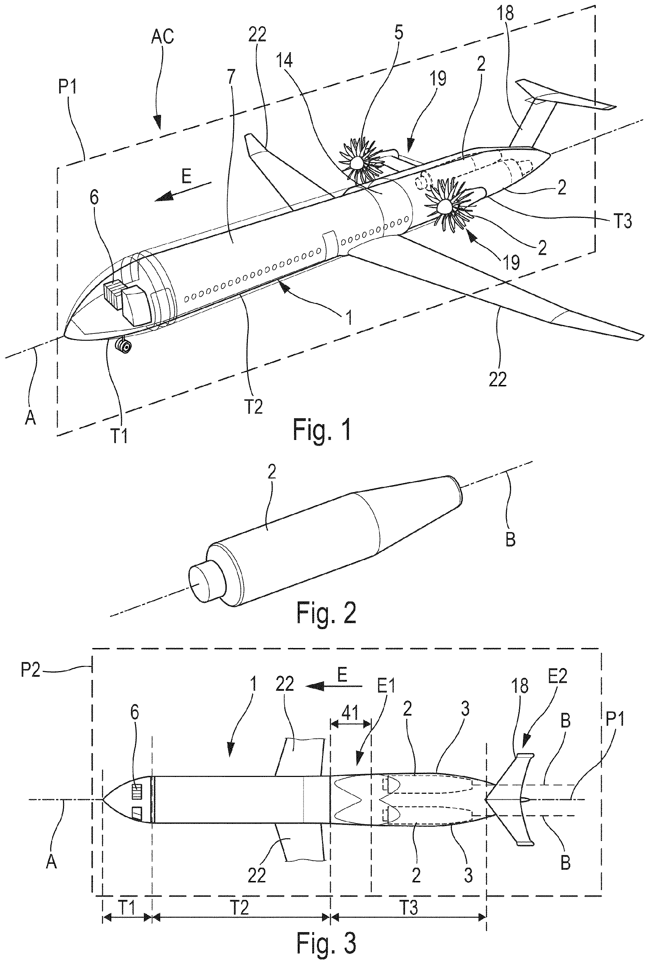

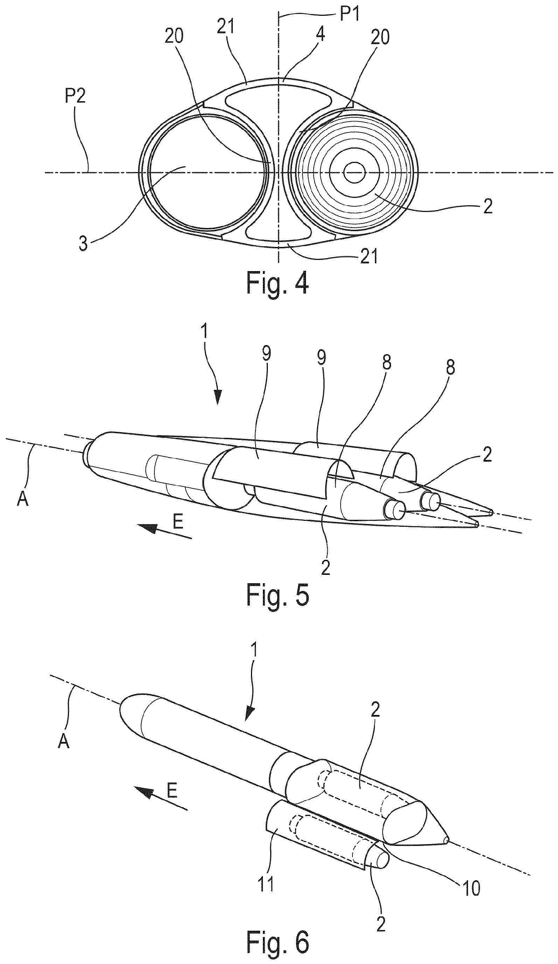

Sur la figure 1, la figure 3 et de la figure 5 à la figure 11, on a représenté une flèche E qui indique le sens d'avancement de l'aéronef. La flèche E est dirigée de l'arrière vers l'avant. Dans la description, les adjectifs « avant » et « arrière » sont donc définis par rapport au sens de la flèche E.

De plus, les adjectifs « supérieur » et « inférieur » sont définis par rapport au sol sur lequel l'aéronef est susceptible d'avancer. Un objet qualifié par l'adjectif « inférieur » se situe plus proche du sol qu'un objet qualifié par l'adjectif « supérieur ». L'adjectif « latéral » qualifie une partie qui se situe d'un côté ou/et de l'autre du plan de symétrie vertical P1 et qui ne coupe pas le plan de symétrie vertical P1.

Par ailleurs, dans la suite de la description, on considère que l'expression « alimenter un moteur » signifie « alimenter un moteur à combustion » ou « alimenter une pile à combustible d'un moteur électrique ».

La figure 1 représente un aéronef AC comprenant un fuselage 1 selon l'invention. Le fuselage 1 peut être mis en oeuvre pour différentes configuration d'aéronef AC classique. Par exemple, le fuselage 1 peut être mis en oeuvre pour des aéronefs à voilure haute (« high-wing aircraft » en anglais), des aéronefs à voilure basse (« low-wing aircraft » en anglais). Il peut être aussi mis en oeuvre pour différentes positions des moteurs 5. Par exemple, les moteurs 5 peuvent être sur la voilure ou sur le fuselage 1. Par ailleurs, les moteurs 5 peuvent correspondre à différents types de moteur 5, tels que des moteurs à soufflante non carénée (« unducted fan engine » en anglais) ou des turboréacteurs à double flux (« turbofan » en anglais). La figure 1 représente un aéronef AC comportant des turbopropulseurs. Mais, on comprend que l'invention est applicable également à un aéronef AC comportant des turboréacteurs.

Le fuselage 1 d'aéronef AC est destiné à recevoir deux réservoirs 2 prévus pour contenir de l'hydrogène liquide. L'hydrogène liquide est destiné à alimenter des moteurs 5 d'au moins un système de propulsion 19 de l'aéronef AC.

Le fuselage 1 présente un plan de symétrie vertical P1 et un axe longitudinal A. Les réservoirs 2 destinés à être reçu par le fuselage 1 présentent chacun un axe longitudinal B.

Avantageusement, les deux réservoirs 2 présentent une forme axisymétrique autour de leur axe longitudinal B respectif. Les deux réservoirs 2 peuvent être en forme de sphère, de cylindre, de cône, de tronc de cône ou avoir une forme adjoignant un tronc de cône à un cylindre ou toute autre forme (par exemple, les réservoirs 2 peuvent présenter une coupe transversale comprenant une succession de portions de droite formant une section fermée). La forme est axisymétrique pour des raisons de masses liée à la pressurisation de l'hydrogène liquide dans les réservoirs 2. La figure 2 représente un réservoir 2 ayant une forme adjoignant un tronc de cône à un cylindre.

Par ailleurs, le fuselage 1 comporte, dans le sens d'avancement E de l'aéronef AC, au moins un tronçon de fuselage T1 configuré pour recevoir un poste de pilotage 6 et un tronçon de fuselage T2 configuré pour recevoir une cabine de passagers 7.

De plus, le fuselage 1 comprend un tronçon de fuselage T3 distinct du tronçon de fuselage T1 et du tronçon de fuselage T2. Le tronçon de fuselage T1, le tronçon de fuselage T2 et le tronçon de fuselage T3 comportent chacun un axe longitudinal confondu avec l'axe longitudinal A.

Le tronçon de fuselage T3 comporte deux logements 3 destinés à loger chacun un réservoir 2. Les deux logements 3 sont configurés pour que l'axe longitudinal B des deux réservoirs 2 soit parallèle à l'axe longitudinal A du fuselage 1 d'aéronef AC quand les deux réservoirs 2 sont installés dans leur logement 3.

Les deux logements 3 sont disposés symétriquement l'un par rapport à l'autre de part et d'autre du plan de symétrie vertical P1. Les deux logements 3 sont configurés pour que le second axe longitudinal B des deux réservoirs 2 soit compris dans un plan commun P2 quand les deux réservoirs sont installés dans leur logement 3. Le plan commun P2 peut être parallèle à un plan horizontal (figure 3).

Les deux logements 3 permettent de loger deux réservoirs 2 identiques, à la différence de l'art antérieur où la disposition en tandem des réservoirs nécessite parfois deux réservoirs de dimensions ou de tailles différentes afin de pouvoir les aligner l'un derrière l'autre. En effet, la disposition des réservoirs 2 dépend de la forme du fuselage 1 qui, dans la présente configuration, permet une surface de contact avec le flux d'air extérieur (« wetted area » en anglais) optimisée. Avantageusement, les réservoirs 2 épousent au moins en partie la forme du fuselage 1.

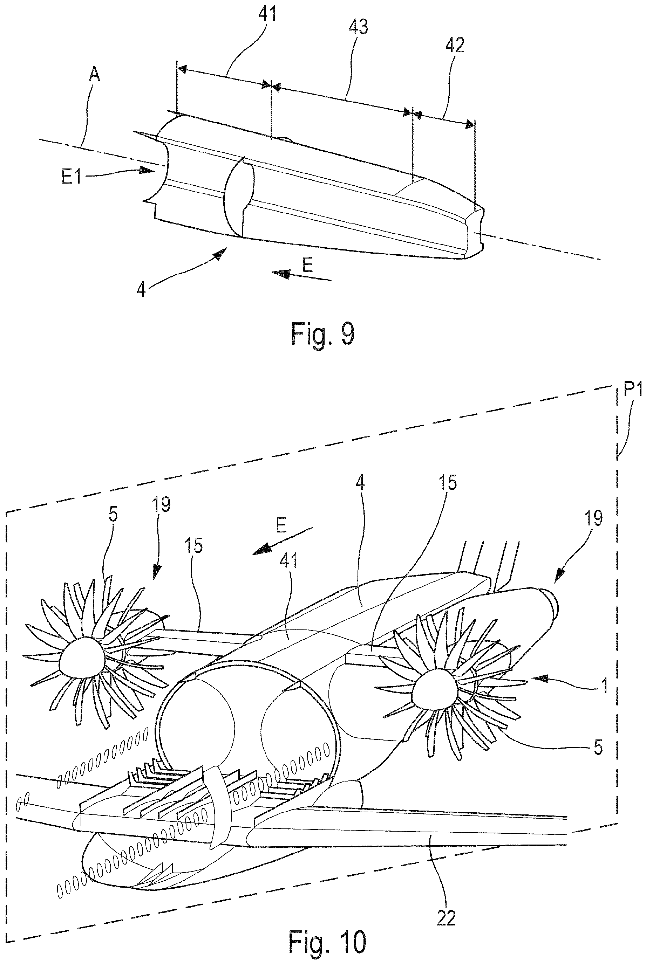

Avantageusement, le tronçon de fuselage T3 comprend une structure travaillante 4 à laquelle le ou les réservoirs 2 sont fixés. Une structure est dite travaillante quand elle est apte à absorber des efforts appliqués sur ladite structure. La structure travaillante 4 peut correspondre à une structure monocoque comprenant des cadres et des lisses fixée au moins en partie solidairement au tronçon de fuselage T3. La structure travaillante 4 peut présenter une forme allongée selon l'axe longitudinal A (figure 9). Elle présente une forme comportant un plan de symétrie confondu avec le plan de symétrie verticale P1. Les réservoirs 2 sont destinés à être fixés à la structure travaillante 4 de part et d'autre du plan de symétrie. D'autres caractéristiques de la structure travaillante 4 sont décrites ci-après dans la description.

Dans un premier mode de réalisation illustré sur la figure 3, la figure 7 et la figure 8, le tronçon de fuselage T3 est situé à l'arrière du tronçon de fuselage T2. De plus, le tronçon de fuselage T3 comporte une cloison étanche 14 séparant le tronçon de fuselage T2 et le tronçon de fuselage T3. Le tronçon de fuselage T3 n'a pas besoin d'être pressurisé comme pour le tronçon de fuselage T2.

Selon le type d'aéronef AC et la position des moteurs 5, la structure travaillante 4 peut présenter une longueur selon l'axe longitudinal A plus importante que la longueur nécessaire pour loger les réservoirs 2.

Ainsi, le tronçon de fuselage T3 peut comprendre une zone avant E1 située entre le tronçon de fuselage T2 et les deux logements 2 (figure 3, figure 7, figure 8, figure 9). Cette zone avant E1 peut comprendre une portion 41 de la structure travaillante 4 destinée à recevoir au moins partiellement le ou les systèmes de propulsion 19 de l'aéronef AC.

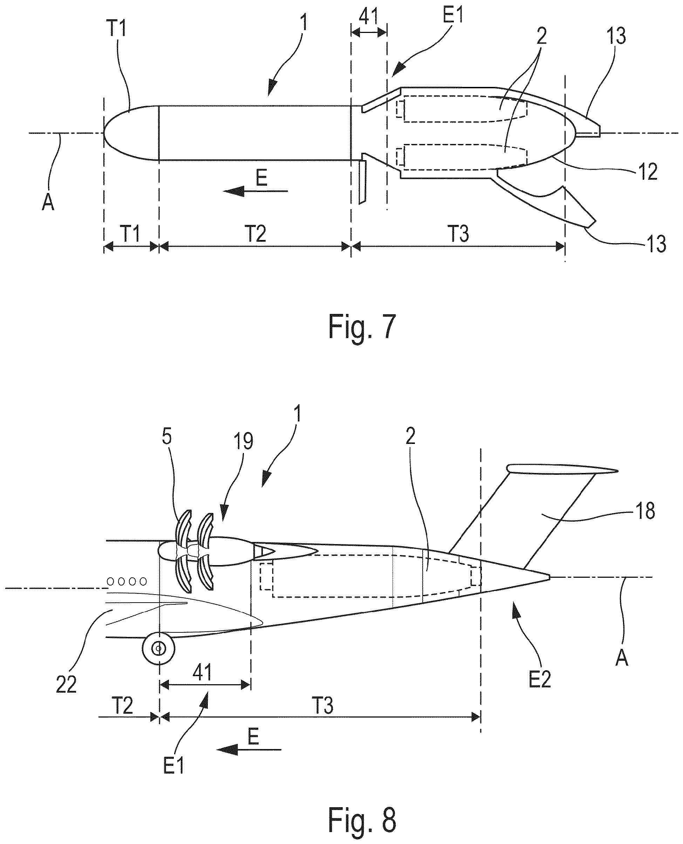

Le ou les systèmes de propulsion 19 peuvent comprendre un dispositif permettant l'alimentation des moteurs 5 du ou des systèmes de propulsion 19 (figure 8).

De plus, le tronçon de fuselage T3 peut comprendre une zone arrière E2 (figure 9). Cette zone arrière E2 comprend une portion 42 de la structure travaillante 4 destinée à recevoir un empennage vertical 18 de l'aéronef AC.

Par ailleurs, dans le cas où l'aéronef comprend des turbopropulseurs, le fuselage 1 peut comprendre deux mâts 15 (« pylon » en anglais) de moteur 5 fixés à la portion 41 de la structure travaillante 4 de part et d'autre du plan de symétrie vertical P1 (figure 10).

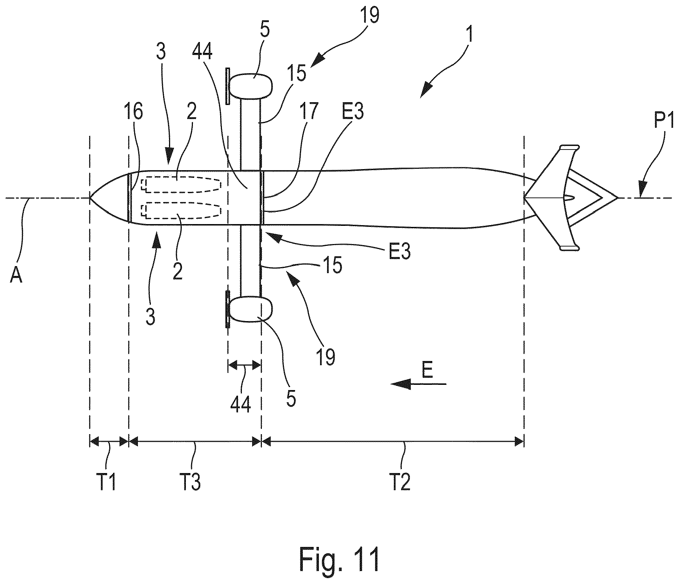

Dans un deuxième mode de réalisation illustré sur la figure 11, le tronçon de fuselage T3 est situé entre le tronçon de fuselage T1 et le tronçon de fuselage T2. De plus, le tronçon de fuselage T3 comporte une cloison étanche 16 séparant le tronçon de fuselage T1 et le tronçon de fuselage T3. Le tronçon de fuselage T3 comporte en outre une cloison étanche 17 séparant le tronçon de fuselage T3 et le tronçon de fuselage T2. Le tronçon de fuselage T3 n'a pas besoin d'être pressurisé comme pour le tronçon de fuselage T2 ou le tronçon de fuselage T1.

De plus, le tronçon de fuselage T3 peut comprendre une zone arrière E3 située entre les deux logements 3 et le tronçon de fuselage T2. Cette zone arrière E3 comprend une portion 44 de la structure travaillante 4 destinée à porter le ou les systèmes de propulsion 19 de l'aéronef AC.

Comme pour le premier mode de réalisation, dans le cas où l'aéronef comprend des turbopropulseurs, le fuselage 1 peut comprendre deux mâts 15 de moteur 5 fixés à la portion 44 de la structure travaillante 4 de part et d'autre du plan de symétrie vertical P1.

Selon une première configuration représentée sur la figure 5, le tronçon de fuselage T3 présente deux ouvertures latérales 8 dans une partie latérale du tronçon de fuselage T3, Les deux ouvertures latérales 8 communiquent respectivement avec un des deux logements 3. Chacune des deux ouvertures latérales 8 est configurée pour laisser le passage d'un réservoir 2 vers un logement 3 respectif. Selon une première variante, le tronçon de fuselage T3 comporte deux carénages amovibles 9. Chacun des deux carénages amovibles 9 est configuré pour fermer et ouvrir alternativement une ouverture latérale 8 respective. La figure 5 représente les deux carénages amovibles 9 dans une position ouverte. Selon une deuxième variante (non représentée), le tronçon de fuselage T3 comporte deux portes. Chacune des deux portes est configurée pour fermer et ouvrir alternativement une ouverture latérale 8 respective. Chacune des deux portes est montée pivotante autour d'un axe parallèle à l'axe longitudinal A de façon qu'elle puisse s'ouvrir vers le haut. Les deux ouvertures latérales 8 peuvent présenter des dimensions permettant le passage des réservoirs 2 parallèlement à un plan horizontal par les parties latérales de l'aéronef AC. Pour cela, de façon non limitative une première ouverture latérale des deux ouvertures latérales 8 peut présenter une dimension d'ouverture angulaire s'étalant de 30° à 150° par rapport au plan de symétrie verticale P1. La deuxième ouverture latérale des deux ouvertures latérales 8 peut présenter une dimension d'ouverture angulaire s'étalant de -30° à -150° par rapport au plan de symétrie verticale P1.

Selon une deuxième configuration représentée sur la figure 6, le tronçon de fuselage T3 présente deux ouvertures inférieures 10 dans une partie inférieure du tronçon de fuselage T3. Les deux ouvertures inférieures 9 communiquent respectivement avec un des deux logements 3. Chacune des deux ouvertures inférieures 9 est configurée pour laisser le passage d'un réservoir 2 vers un logement 3 respectif. Le tronçon de fuselage T3 comporte deux portes travaillantes inférieures 11. Chacune des deux portes travaillantes inférieures 11 est configurée pour fermer et ouvrir alternativement une ouverture inférieure 9 respective. Les deux ouvertures inférieures 9 permettent le passage des réservoirs 2 parallèlement au plan de symétrie vertical P1 par le ventre de l'aéronef AC. La figure 6 représente une des deux portes travaillantes inférieures 11 dans une position ouverte laissant le passage d'un réservoir 2. L'autre des deux portes travaillantes inférieures 11 est représentée dans une position fermée. Par exemple, chacune des deux portes travaillantes inférieures 11 peut être montée pivotante autour d'un axe parallèle à l'axe longitudinal A de façon qu'elle puisse s'ouvrir vers le bas.

Selon une troisième configuration représentée sur la figure 7, le tronçon de fuselage T3 présente deux ouvertures arrière 12 dans une partie arrière du tronçon de fuselage T3. Les deux ouvertures arrière 12 communiquent respectivement avec un des deux logements 3. Chacune des deux ouvertures arrière 12 est configurée pour laisser le passage d'un réservoir 2 vers un logement 3 respectif. Le tronçon de fuselage T3 comporte deux portes travaillantes arrière 13. Chacune des deux portes travaillantes arrière 13 est configurée pour fermer et ouvrir alternativement une ouverture arrière 12 respective. Les deux ouvertures arrière 12 permettent le passage des réservoirs 2 parallèlement à un plan horizontal. La figure 7 représente une des deux portes travaillantes arrière 13 est dans un position ouverte alors que l'autre des deux portes travaillantes arrière 13 est dans une position fermée. Par exemple, chacune des deux portes travaillantes arrière 13 peut être montée pivotante autour d'un axe perpendiculaire à l'axe longitudinal A de façon qu'elle puisse s'ouvrir latéralement.

L'accès aux logements des réservoirs disposés en tandem selon l'art antérieur nécessite l'utilisation de portes d'accès aux réservoirs à travers le revêtement du fuselage 1 de dimensions importantes ou une partie arrière du fuselage amovible, ce qui peut entraîner des désavantages quant à la masse de l'aéronef AC ou des contraintes sur les panneaux de revêtement du fuselage 1.

Pour les trois configurations, la structure travaillante 4 peut cloisonner les deux logements 3. Autrement dit, la structure travaillante 4 fait une séparation entre les deux logements 3. Les deux réservoirs 2 sont donc bien isolés l'un de l'autre quand ils sont logés dans les deux logements 3. Comme représenté sur la figure 4, la structure travaillante 4 peut correspondre à une structure fermée ou « caissonnée ». Elle peut présenter une section transversale symétrique par rapport au plan de symétrie vertical P1. Sur la figure 4, la structure travaillante 4 comporte deux parois courbes 20 symétriques par rapport au plan de symétrie vertical P1. Ces parois courbes 20 forment chacun au moins en partie la paroi d'un logement 3 respectif. Chacune des parois courbes 20 est configurée pour épouser la forme du réservoir 2 destiné à être installé dans le logement 3. La structure travaillante 4 comprend également deux parois courbes 21. Ces deux parois courbes 21 lient les deux parois courbes 20 : une paroi courbe 21 lie les parois courbes 20 au niveau de leurs parties supérieures et l'autre paroi courbe 21 lie les parois courbes 20 au niveau de leurs parties inférieures. Ces deux parois courbes 21 forment une partie du fuselage 1 en contact avec le flux d'air extérieur.

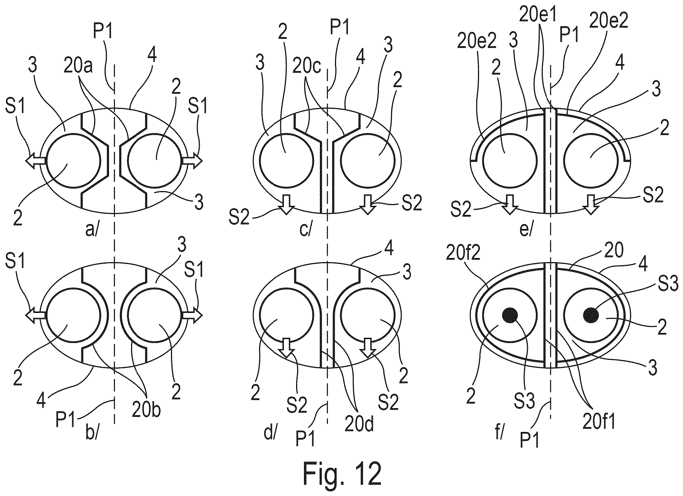

Les figures 12 représentent d'autres exemples a, b, c, d, e, f de sections transversales de la structure travaillantes 4.

Les exemples a et b de la figure 12 représentent des structures travaillantes 4 destinées pour être utilisées pour des ouvertures latérales 8 permettant le passage des réservoirs 2 parallèlement à un plan horizontal par les parties latérales de l'aéronef AC. Les flèches S1 représentent le sens de déplacement latéral des réservoirs 2 quand ils sont retirés des logements 3. Dans l'exemple a, les deux parois courbes 20 sont remplacées par des parois 20a droites. Dans l'exemple b, les deux parois courbes 20 sont remplacées par des parois 20b dont deux parois droites et une paroi courbe entre les deux parois droites.

Les exemples c, d et e de la figure 12 représentent des structures travaillantes 4 destinées pour être utilisées pour des ouvertures inférieures 9 permettent le passage des réservoirs 2 parallèlement au plan de symétrie vertical P1 par le ventre de l'aéronef AC. Les flèches S2 représentent le sens de déplacement vers le bas des réservoirs 2 quand ils sont retirés des logements 3. Dans l'exemple c, les deux parois courbes 20 sont remplacées par des parois 20c comportant deux parois droites. Dans l'exemple d, les deux parois courbes 20 sont remplacées par des parois 20d comportant une paroi droite et une paroi partiellement courbe. Dans l'exemple e, les deux parois courbes 20 sont remplacées par des parois droites 20e1 destinées à isoler les réservoirs 2 l'un par rapport à l'autre et par des parois 20e2 destinées à recouvrir une partie supérieure des réservoirs 2.

L'exemple f de la figure 12 représente une structure travaillante 4 destinée pour être utilisée pour des ouvertures arrière 12 permettent le passage des réservoirs 2 parallèlement à un plan horizontal. Les flèches S3 représentent le sens de déplacement vers l'arrière des réservoirs 2 quand ils sont retirés des logements 3. Dans l'exemple f, les deux parois courbes 20 sont remplacées par des parois droites 20f1 destinées à isoler les réservoirs 2 l'un par rapport à l'autre et par des parois 20f2 destinées à entourer les réservoirs 2.

Dans un exemple non représenté, les moteurs 5 peuvent être fixés à une voilure 22 fixée au fuselage 1 au moins en partie au tronçon T2 et/ou au tronçon T3. Les moteurs 5 peuvent être fixés sur la voilure 22 ou sous la voilure 22.

La structure travaillante 4 permet de lier les deux réservoirs 2 au fuselage 1. Elle permet également d'assurer un transfert de charge de l'empennage vertical 18 vers l'avant du fuselage 1. Elle permet de sécuriser davantage l'utilisation de réservoirs 2 contenant de l'hydrogène liquide en assurant un cloisonnement entre les deux réservoirs 2. Elle peut aussi fournir une enceinte pour loger différents systèmes techniques, tels que le circuit de commande de vol de l'aéronef AC ou des lignes électriques d'un groupe auxiliaire de bord (« auxiliary power unit » en anglais) quand ce groupe auxiliaire se situe à l'arrière de l'aéronef AC.

Pour la troisième configuration (figure 7), la structure travaillante 4 peut entourer les deux logements 3 en plus de cloisonner les deux logements 3. Ainsi, la structure travaillante 4 délimite longitudinalement chacun des deux logements 3. Quand les deux réservoirs 2 sont reçus dans les deux logements 3, les deux réservoirs sont donc bien isolés l'un de l'autre tout en étant entourés circonférentiellement par la structure travaillante 4. La structure travaillante 4 peut correspondre à un voile auto-raidi.

## Revendications

1. Fuselage d'aéronef destiné à recevoir deux réservoirs (2) prévus pour contenir de l'hydrogène liquide, l'hydrogène liquide étant destiné à alimenter des moteurs (5) d'au moins un système de propulsion (19) de l'aéronef (AC), le fuselage (1) présentant un plan de symétrie vertical (P1) et un premier axe longitudinal (A), les deux réservoirs (2) présentant chacun un second axe longitudinal (B), le fuselage (1) comportant dans le sens d'avancement (E) de l'aéronef (AC) au moins un premier tronçon de fuselage (T1) configuré pour recevoir un poste de pilotage (6) et un deuxième tronçon de fuselage (T2) configuré pour recevoir une cabine de passagers (7),
**caractérisé en ce qu'**il comprend un troisième tronçon de fuselage (T3) distinct du premier tronçon de fuselage (T1) et du deuxième tronçon de fuselage (T2), le troisième tronçon de fuselage (T3) comportant deux logements (3) destinés à loger chacun un réservoir (2), les deux logements (3) sont configurés pour que le second axe longitudinal (B) des deux réservoirs (2) soit parallèle au premier axe longitudinal (A) du fuselage (1) d'aéronef (AC) quand les deux réservoirs sont installés dans leur logement (3), les deux logements (3) étant disposés symétriquement l'un par rapport à l'autre de part et d'autre du plan de symétrie vertical (P1), les deux logements (3) étant configurés pour que le second axe longitudinal (B) des deux réservoirs (2) soit compris dans un plan commun (P2) quand les deux réservoirs sont installés dans leur logement (3).

2. Fuselage selon la revendication 1,
**caractérisé en ce que** le troisième tronçon de fuselage (T3) comprend une structure travaillante (4) à laquelle les deux réservoirs (2) sont fixés.

3. Fuselage selon l'une quelconque des revendications 1 et 2,
**caractérisé en ce que** le troisième tronçon de fuselage (T3) est situé à l'arrière du deuxième tronçon de fuselage (T2), le troisième tronçon de fuselage (T3) comportant une cloison étanche (14) séparant le deuxième tronçon de fuselage (T2) et le troisième tronçon de fuselage (T3).

4. Fuselage selon les revendications 2 et 3,
**caractérisé en ce que** le troisième tronçon de fuselage (T3) comprend une zone avant (E1) située entre le deuxième tronçon de fuselage (T2) et les deux logements (2), la zone avant (E1) comprenant une première portion (41) de la structure travaillante (4) destinée à recevoir le ou les systèmes de propulsion (19) de l'aéronef (AC).

5. Fuselage selon la revendication 4,
**caractérisé en ce qu'**il comprend deux mâts (15) de moteur (5) fixés à la première portion (41) de la structure travaillante (4) de part et d'autre du plan de symétrie vertical (P1).

6. Fuselage selon la revendication 2 et l'une quelconque des revendications 3 à 5 ;
**caractérisé en ce que** le troisième tronçon de fuselage (T3) comprend une zone arrière (E2), la zone arrière (E2) comprenant une deuxième portion (42) de la structure travaillante (4) destinée à recevoir un empennage vertical (18) de l'aéronef (AC).

7. Fuselage selon l'une quelconque des revendications 1 et 2,
**caractérisé en ce que** le troisième tronçon de fuselage (T3) est situé entre le premier tronçon de fuselage (T1) et le deuxième tronçon de fuselage (T2), le troisième tronçon de fuselage (T3) comportant une première cloison étanche (16) séparant le premier tronçon de fuselage (T1) et le troisième tronçon de fuselage (T3), le troisième tronçon de fuselage (T3) comportant en outre une deuxième cloison étanche (17) séparant le troisième tronçon de fuselage (T3) et le deuxième tronçon de fuselage (T2).

8. Fuselage selon la revendication 5,
**caractérisé en ce que** le troisième tronçon de fuselage (T3) comprend une zone arrière (E3) située entre les deux logements (2) et le deuxième tronçon de fuselage (T2), la zone arrière (E3) comprenant une portion (44) de la structure travaillante (4) destinée à porter le ou les systèmes de propulsion (19) de l'aéronef (AC).

9. Fuselage selon la revendication 4,
**caractérisé en ce qu'**il comprend deux mâts (15) de moteur (5) fixés à la portion (44) de la structure travaillante (4) de part et d'autre du plan de symétrie vertical (P1).

10. Fuselage selon l'une quelconque des revendications 1 à 8,
**caractérisé en ce que** le troisième tronçon de fuselage (T3) présente deux ouvertures latérales (8) dans une partie latérale du troisième tronçon de fuselage (T3), les deux ouvertures latérales (8) communiquant respectivement avec un des deux logements (3), chacune des deux ouvertures latérales (8) étant configurée pour laisser le passage d'un réservoir (2) vers un logement (3) respectif, le troisième tronçon de fuselage (T3) comportant deux carénages amovibles (9), chacun des carénages amovibles (9) étant configuré pour fermer et ouvrir alternativement une ouverture latérale (8) respective.

11. Fuselage selon l'une quelconque des revendications 1 à 8,
**caractérisé en ce que** le troisième tronçon de fuselage (T3) présente deux ouvertures inférieures (10) dans une partie inférieure du troisième tronçon de fuselage (T3), les deux ouvertures inférieures (9) communiquant respectivement avec un des deux logements (2), chacune des deux ouvertures inférieures (9) étant configurée pour laisser le passage d'un réservoir (2) vers un logement (3) respectif, le troisième tronçon de fuselage (T3) comportant deux portes travaillantes inférieures (11), chacune des portes travaillantes inférieures (11) étant configurée pour fermer et ouvrir alternativement une ouverture inférieure (9) respective.

12. Fuselage selon l'une quelconque des revendications 1 à 6,
**caractérisé en ce que** le troisième tronçon de fuselage (T3) présente deux ouvertures arrière (12) dans une partie arrière du troisième tronçon de fuselage (T3), les deux ouvertures arrière (12) communiquant respectivement avec un des deux logements (2), chacune des deux ouvertures arrière (12) étant configurée pour laisser le passage d'un réservoir (2) un logement (3) respectif, le troisième tronçon de fuselage (T3) comportant deux portes travaillantes arrière (13), chacune des deux portes travaillantes arrière (13) étant configurée pour fermer et ouvrir alternativement une ouverture arrière (12) respective.

13. Fuselage selon la revendication 2 et l'une quelconque des revendications 3 à 10,
**caractérisé en ce que** la structure travaillante (4) cloisonne les deux logements (3).

14. Fuselage selon la revendication 2 et l'une quelconque des revendications 3 à 6 et 11,
**caractérisé en ce que** la structure travaillante (4) entoure les deux logements (2).

15. Fuselage selon la revendication 2 et l'une quelconque des revendications 3 à 14,
**caractérisé en ce que** la structure travaillante (4) présente une forme allongée selon l'axe longitudinal (A) et comportant un plan de symétrie confondu avec le plan de symétrie verticale (P1).

16. Aéronef,
comportant un fuselage (1) selon l'une quelconque des revendications 1 à 15.
